# EUROPEAN PATENT APPLICATION

(11) **EP 1 041 334 A1**
(43) Date of publication of application: **04.10.2000**
(21) Application number: 00660063.9
(22) Date of filing: 30.03.2000
(51) Int. Cl.: F16L 47/06, F16L 21/02, F16L 21/08

(54) **Pipe joint and method of making a pipe joint**

(30) Priority: 01.04.1999 FI 990740
(71) Applicant: Uponor Innovation AB, 513 81 Fristad (SE)
(72) Inventor: Hippeläinen, Esko, 15200 Lahti (FI); Järvenkylä, Jyri, 15870 Hollola (FI)
(74) Representative: Huhtanen, Ossi Jaakko

(57) **Abstract**

A pipe joint and a method of making a pipe joint, in which a sleeve (3) is positioned inside the end of a first pipe (1) to be joined and the end of a second pipe (2) to be joined is positioned in such a way that the sleeve (3) is located between the end of the first pipe (1) and the end of the second pipe (2). The pipe joint comprises means for preventing an axial movement of the pipes (1, 2) to be joined, which movement would open the joint.

## Description

The invention relates to a pipe joint for joining together a first pipe and a second pipe, the end of the first pipe being provided with a socket and the pipe joint comprising a sleeve, which sleeve is meant to be positioned inside the socket provided at the end of the first pipe, while the end of the second pipe is meant to be positioned inside the sleeve, and the pipe joint comprising means for preventing an axial movement of the pipes to be joined, which movement would open the joint.

The invention relates further to a method of making a pipe joint, in which method the end of a first pipe is provided with a socket, a sleeve is positioned inside the socket provided at the end of the first pipe, the end of a second pipe is positioned inside the sleeve and the first pipe and the second pipe are arranged essentially immovable with respect to each other by means for preventing an axial movement of the pipes to be joined, which movement would open the joint.

At pressure pipe use, forces proportional to the medium pressure in a pipe are caused in pipe joints and sockets. A decisive factor for dimensioning a pipe socket is the peripherical stress arising in the pipe wall, on the basis of which stress the wall thickness of the socket must be at least the same as that of the rest of the wall. As disclosed in Finnish Patent 94902, for instance, it is often considered necessary to emphasize the strength properties of the socket portion especially in the peripherical direction, to achieve a tight and reliable pipe joint. The strength properties of the pipe portion are instead mostly directed both peripherically and axially according to the loads the pipe portion is subjected to. If the pipe is provided with a socket afterwards by expanding, the wall becomes thinner when expanded, and accordingly, the pipe blank has to be thicker at the place of the future socket than the rest of the pipe. This can be implemented for instance in such a way that, at the manufacture, the draw rate of the pipe is slowed down at the place of the future socket. However, a solution of this kind is uncomfortable and makes the manufacture of a pipe difficult. A thickening is known from U.S. Patent 4428900, for instance.

At reducers, branch joints, bent angles or valves in a pipeline, there occur axial forces tending to open the joint. It would be most ideal if the pipe joint itself were provided with a mechanism preventing the opening, but the big forces caused by locking means and the required dimensional accuracy make this arrangement impossible in pipes provided with sockets. In practice, the locking problem is solved for example by casting the problematic places in concrete or by winding cast iron bands interconnected by bars around the joined pipes. Moreover, a solution to reinforce a socket is known from Finnish Publication 97036, for instance, where a sufficient axial and radial strength of a locking solution inside the socket is achieved by a reinforcement outside the socket.

A third problem associated with the use of a pipe socket consists in after-shrinkage of sockets. The socket then tends to revert to its original measures and to make a joint is difficult, especially if pipes have to be stored for a long time after the socket has been made for instance in the sun. In these conditions, to make sockets having accurate measures is difficult, and it is especially difficult to make sealing grooves having accurate inner measures, particularly if there are many of them. This is an especially big problem with pipes made of polyethylene PE, and therefore, these pipes are joined together by welding, in practice.

A further conventional problem with a weak socket joint is that the mouth of the pipe expands and the sealing ring is pushed out of the joint. Attempts have been made to solve this problem e.g. by using sealing rings with a metallic or plastic support disposed in them. Such a solution is disclosed in U.S. Patent 4 030 872, for instance. Another solution has been to mount a metal band around the mouth of the pipe.

Molecule-orientated MOPVC pipes are made of polyvinyl chloride by blow moulding in such a way that a plastic tubular blank is positioned inside a mould, it is heated and expanded against the mould by blowing from inside, as disclosed in British Patent 1432539. It is thereby possible to form a socket in the pipe simultaneously, but then the outer dimensions of the socket become accurate, while the inner, i.e. significant, dimensions remain inaccurate. The same problem concerns for instance the method and the apparatus for the manufacture of a biaxially orientated pipe by heating a tubular blank and by pressing it with fluid pressure against the mould, as disclosed in WO 98/13190.

For the above reasons, more demanding socket applications are found among fittings manufactured by casting or injection moulding. WO 96/07048, for instance, discloses an injection moulded socket provided with a locking ring. However, the major part of the sockets of a pipe line are pipe sockets, and to replace them by fittings is not economically sensible.

Further, a joint is known where the socket portion is manufactured by injection moulding and connected to the end of a straight pipe by butt welding. However, such a solution is complicated and expensive to implement, and moreover, all pipe materials used at present are not weldable.

Finnish Publication 945107 discloses a pipe joint for insert pipes, the end of a first pipe being expanded and a sleeve being positioned inside it or the sleeve being expanded and the first pipe being positioned inside the sleeve. Subsequently, the end of a second pipe is positioned inside the sleeve. Such a joint is suitable for joining insert pipes, but it is difficult to achieve a tight joint and said joint would not last at pressure pipe use, but the force caused by pressurized medium would move the first pipe and the second pipe loose from each other quite easily.

British Specification 1 329 217 discloses a pipe joint, where a sleeve is positioned between an outer and an inner pipe. The sleeve is fixed to the inner pipe by welding, for instance, and the outer pipe and the sleeve are joined together such that they are provided with grooves and a flexible rod is positioned in a space formed by the grooves.

German Specification 3003040 discloses a pipe joint provided with an interconnector having inside a pipe adapter and a clamping ring and, innermost in the joint, a pipe to be joined. Between the pipe adapter and the clamping ring, there is a wedge surface such that the clamping ring is wedged against the pipe when the inner pipe is pulled from the joint outwards. Said pipe joint is complicated and very hard to provide with such a shape that the pipe adapter and the interconnector can be made immovable with respect to each other.

U.S. Patent 5 299 838 discloses a pipe joint having a connection slot and a sleeve positioned inside it by a screw thread. A clip assembly is arranged inside the sleeve, and a pipe to be joined is pushed into the clip assembly. The clip assembly comprises retainers consisting of plates turning around an axis, the outer end of the plates being arranged to be engaged in the grooves inside the sleeve when the inner pipe is pulled outwards and the inner ends being arranged to grasp the outer surface of the pipe. Accordingly, the retainers are meant for preventing the inner pipe from being pulled out of the inside of the connection slot. Said pipe joint is very complicated and difficult to implement. Further, it is very difficult to secure the tightness especially when using pressure pipes.

The object of this invention is to provide a durable pipe joint and a method of providing a durable pipe joint.

The pipe joint of the invention is characterized in that the sleeve is reinforced such that the unit formed by the socket and the sleeve is able to resist to higher pressure than the body of the first pipe and the axial tensile strength of the unit formed by the socket and the sleeve is higher than the axial tensile strength of the body of the first pipe.

Further, the method of the invention is characterized in that the sleeve is reinforced such that the unit formed by the socket and the sleeve is able to resist to higher pressure than the body of the first pipe and the axial tensile strength of the unit formed by the socket and the sleeve is higher than the axial tensile strength of the body of the first pipe.

The essential idea of the invention is that the end of a first pipe to be joined is provided with a socket, and a sleeve and the end of a second pipe to be joined are positioned inside the socket in such a way that the sleeve is between the end of the first pipe and the end of the second pipe and that the joint comprises means for preventing an axial movement of the pipes to be joined, which movement would open the joint. Further, the pressure resistance and the axial tensile strength of a combination formed by the socket and the sleeve are arranged to be higher than the corresponding properties of the pipe body. The idea of a preferred embodiment is that the means for preventing an axial movement of the pipes to be joined, which movement would open the joint, are constituted by a wedge ring positioned between the ends of the pipes, the wedge ring being positioned preferably between the sleeve and the end of the inner pipe, the sleeve and the wedge ring having wedge surfaces positioned against each other.

An advantage of the invention is that the joint can be made very tight and it is suitable also for pressure pipe use and resists the effect of the force caused by the medium in a pressure pipe without the pipes to be joined substantially moving axially with respect to each other. Further, the joint as a whole has a very durable structure. The sleeve compensates for radial forces so that the wall of the outer pipe at the joint needs not be made thicker than the remaining part of it in advance. Further, by using a sleeve, the inner measure of the pipe socket can be made accurate, because the sleeve prevents an after-shrinkage of the pipe. It is easy to manufacture a sleeve by injection moulding, whereby the sleeve will have accurate measures, and if necessary, also difficult shapes can be manufactured. Moreover, a sleeve can be manufactured easily by injection moulding in such a way that the critical points can be provided with a sufficient amount of material. By means of the wedge surfaces of the sleeve and the wedge ring, an effect can be provided in a simple manner, preventing an axial opening movement between the sleeve and the pipe.

The invention will be described in more detail in the attached drawing, in which
Figure 1 shows schematically a pipe joint according to the invention from the side and partially in cross-section,
Figure 2 shows schematically another pipe joint according to the invention from the side and partially in cross-section, and
Figure 3 shows schematically a third pipe joint according to the invention from the side and partially in cross-section.

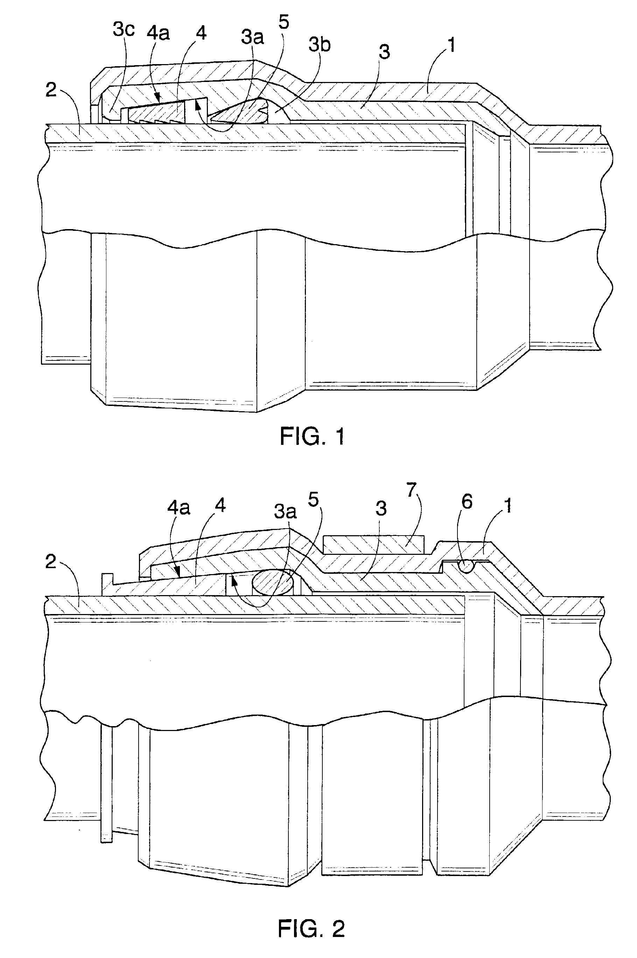

Figure 1 shows a pipe joint, in which the end of a first pipe 1 is provided with a socket and a sleeve 3 is positioned inside the socket. The diameter of the first pipe 1 is bigger at the socket than at other parts and these other parts are called the body of the pipe 1. On the other hand, the end of a second pipe 2 is positioned inside the sleeve 3. The sleeve 3 can be positioned inside the end of the first pipe 1 for instance in such a way that the end of the first pipe 1 is heated and the sleeve 3 is forced inside the end of the first pipe 1 by pushing. The outer diameter of the sleeve 3 is dimensioned bigger than the inner diameter of the pipe 1, which makes the joint between the first pipe 1 and the sleeve 3 tight. The outer surface of the point of the sleeve 3 and the inner surface of the end of the pipe 1 can be provided with chamferings, which facilitate pushing the sleeve 3 into the pipe 1. The end of the first pipe 1 can also be heated and expanded and the sleeve 3 can be pushed into the expanded first pipe 1. When cooling, the first pipe 1 is pressed tightly on the sleeve 3 and the joint between the sleeve 3 and the first pipe 1 then becomes tight automatically. At the manufacture of molecule-orientated PVC pipes or other pipes orientated in peripherical and possibly axial direction, the sleeve 3 can be positioned inside the first pipe 1 by manufacturing the first pipe 1 by blow moulding, for instance, and by cooling the pipe. Subsequently, the sleeve 3 is pushed into the expanded end of the first pipe 1 and the first pipe 1 is heated so that it is pressed tightly on the sleeve 3. Further, molecule orientation can be utilized in such a way that, before joining, the sleeve 3 is stretched axially more than the pipe 1, which makes the sleeve 3 expand when heated and be pressed against the inner surface of the first pipe 1.

The sleeve 3 can be positioned as far inside the first pipe 1 that the end of the first pipe 1 extends over the sleeve 3, whereby the end of the first pipe 1 can be bent on the face of the sleeve 3 and, in this way, it is possible to make sure that the sleeve 3 and the first pipe 1 remain immovable with respect to each other. Further, the outer surface of the sleeve 3 can be provided with inequalities, such as grooves, protrusions, chamfered surfaces or barbs and the like, by the effect of which the sleeve 3 and the first pipe 1 remain immovable with respect to each other. The sleeve 3 is preferably made by injection moulding, due to which the sleeve 3 will have accurate measures and difficult shapes can also be manufactured. The sleeve 3 can be manufactured of a material, for instance a plastic reinforced with glass fibre, so stiff that pressing the first pipe 1 on the sleeve 3 does not change the size and shape of the inner part of the sleeve 3 substantially. Materials used for the sleeve 3 can be for instance polyethylene PE, crosslinked polyethylene PEX or polyvinyl chloride PVC.

The end of the second pipe 2 is positioned inside the sleeve 3. Between the sleeve 3 and the second pipe 2, it is possible to position a wedge ring 4. The wedge ring 4 has a wedge surface 4a positioned against a wedge surface 3a of the sleeve 3. An axial movement between the second pipe 2 and the sleeve 3 is then prevented by the effect of the wedge surfaces 3a and 4a. The axial movement is prevented by the fact that, because of the wedge surfaces 3a and 4a, said points are exposed to a strong radial friction force, which makes the wedge ring 4 be pressed tightly against the second pipe 2. Friction between the wedge ring 4 and the second pipe 2 can be increased for instance by providing the inner surface of the wedge ring 4 with a toothing or a metal surface or some other suitable solution to increase the friction.

Besides or instead of using a wedge ring 4, an axial movement between the first pipe 1 and the second pipe 2, which movement would open the joint, can be prevented for instance by utilizing adhesives, so-called molten materials, such as hot melt adhesives, ribs and/or grooves, and so on, between the sleeve 3 and the first pipe 1 and between the sleeve 3 and the second pipe 2, respectively. Further, welding wires or welding mass, for example, can be added between the pipe and the sleeve or for instance into the sleeve, whereby the parts can be welded together. Moreover, it is possible to utilize for instance friction welding for example in such a way that the sleeve 3 is rotated or rotated back and forth by means of a rotary mandrel inside the pre-expanded first pipe 1 such that the sleeve 3 and the first pipe 1 are welded together. The sleeve 3 can be positioned inside the first pipe 1 at the factory and prefabricated products comprising the sleeve 3 and the pipe 1 can be stored for a desired time. The remaining part of the pipe joint can then be made at the site of use.

Inside the sleeve 3, it is possible to arrange a sealing groove 3b, where a sealing ring 5 can be positioned to secure the tightness of the joint between the sleeve 3 and the second pipe 2. Further, the inner surface of the sleeve 3 can be provided with a protrusion 3c serving as a mechanical hindrance preventing the wedge ring 4 from sliding out of the sleeve 3.

Figure 2 shows another pipe joint according to the invention from the side and partially in cross-section. A sealing groove can be arranged outside the sleeve 3, in which groove an auxiliary sealing 6 can be positioned. By means of the auxiliary sealing 6, it is then possible to secure the tightness between the first pipe 1 and the sleeve 3. Outside the joint, an outer band 7 can be arranged, which makes sure that the sleeve remains inside the first pipe. The outer band 7 can be a band made of stainless steel, for instance, and tightened by suitable means on the joint.

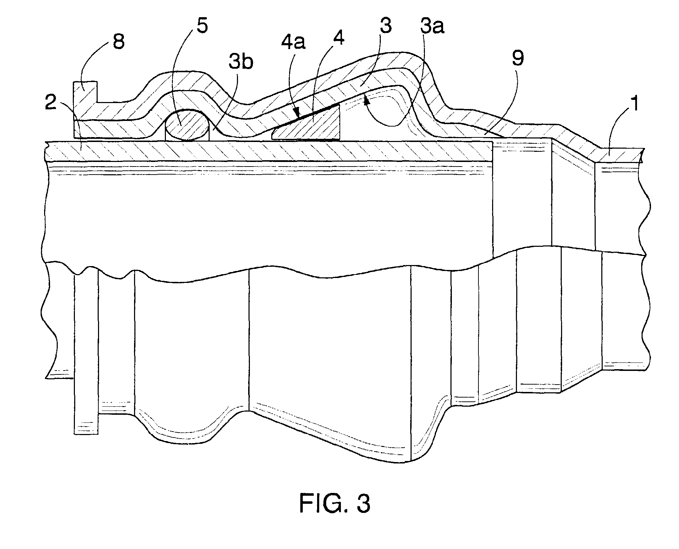

Figure 3 shows a third pipe joint according to the invention from the side and partially in cross-section. The sleeve 3 comprises a chamfered end 9 facilitating the pushing of the sleeve 3 into the first pipe 1. At the sealing groove, the sleeve 3 comprises a protrusion outwards, by means of which the sleeve 3 is locked immovable with respect to the first pipe 1.

Orientation degrees and/or orientation directions of the materials of the pipe 1 and the sleeve 3 may differ from each other and they can be modified suitably for each object of use. Orientation may be, besides orientation of polymer molecules, also orientation of a possible fibre reinforcement. If the sleeve 3 is exposed to mainly peripherical stresses and forces, the orientation is especially peripherical. On the other side, if the sleeve 3 is exposed to mainly axial forces, the orientation of the sleeve 3 is mainly axial. For instance, if the sleeve 3 is exposed to an axial tensile stress when the wedge ring 4 is supported against the wedge surface 3a of the sleeve 3, it is preferable to orientate the sleeve 3 or to reinforce it with fibres axially. The pipe 1 and the sleeve 3 can be manufactured of the same polymer, but their fillers and/or reinforcing materials and the contents of them may differ from each other. The end of the first pipe 1 is provided with a collar-like additional reinforcement 8 of the pipe 1 mouth, which especially increases the peripherical strength of the mouth.

By means of orientation or fibre reinforcement, for instance, the sleeve 3 can be reinforced such that the pressure resistance of the unit formed by the socket at the end of the first pipe 1 and the sleeve 3 is higher than the pressure resistance of the body of the first pipe 1. In the above manner, it is possible to make the axial tensile strength of the unit formed by the socket of the first pipe 1 and the sleeve 3 higher than the axial tensile strength of the body of the first pipe 1. The sleeve 3 can also be made such that it is less thick than the wall of the first pipe 1, but both axially and radially stronger. If the sleeve 3 contains reinforcing fibres, the radial heat expansion of the unit formed by the socket and the sleeve 3 decreases.

In the prior art solution, it has not been possible to join together pipes of different materials by a rubber ring socket joint, for instance, because at subzero temperatures, for example, the insert end does not even fit into the socket on account of the different heat expansions of the separate pipes. Because the heat expansion of fibre reinforced material is insignificant, these problems are eliminated by using a fibre reinforced sleeve 3. Further, a sleeve 3 made of a suitable material and provided with sealings on the inner and outer surfaces is suitable for use in connection with pipes of many different materials, if only the pipe diameters are suitable. Without a sleeve 3, tools of different kinds should be used for each material at socket joint, because different materials have different shrinkages.

In general, the use of fibre material does not increase the pressure resistance of plastic pipes, because the fibres are axially directed at extrusion. When using a sleeve 3, however, sleeves can be made easily for example by tangential injection moulding, the sleeves having an almost tangential fibre orientation. In this way, it is possible to achieve a high pressure resistance even by a very thin wall thickness.

The drawing and the associated specification are only meant to illustrate the idea of the invention. As far as details are concerned, the invention may vary within the scope of the claims. So the pipes 1, 2 and the sleeve 3 may comprise more than one material layer. The pipe joint according to the invention can also be used for pipes other than pressure pipes meant for conveying pressurized water. For example, the pipe joint can be used in connection with protecting pipes of telecommunication and other cables. Then a locking between the sleeve 3 and the first pipe 1, for instance, can be implemented in such a way that the first pipe 1 is merely shrank on the sleeve 3, because the joint does not require complete tightness.

## Claims

1. A pipe joint for joining together a first pipe (1) and a second pipe (2), the end of the first pipe (1) being provided with a socket and the pipe joint comprising a sleeve (3), which sleeve (3) is meant to be positioned inside the socket at the end of the first pipe (1), while the end of the second pipe (2) is meant to be positioned inside the sleeve (3), and the pipe joint comprising means for preventing an axial movement of the pipes (1, 2) to be joined, which movement would open the joint, **characterized** in that the sleeve (3) is reinforced such that the unit formed by the socket and the sleeve (3) is able to resist to higher pressure than the body of the first pipe (1) and the axial tensile strength of the unit formed by the socket and the sleeve (3) is higher than the axial tensile strength of the body of the first pipe (1).

2. A pipe joint according to claim 1, **characterized** in that the means for preventing an axial movement of the pipes (1, 2) to be joined, which movement would open the joint, are constituted by a wedge ring (4) positioned between the ends of the pipes (1, 2).

3. A pipe joint according to claim 2, **characterized** in that the wedge ring (4) is positioned between the sleeve (3) and the second pipe (2) and that the sleeve (3) and the wedge ring (4) are provided with wedge surfaces (3a, 4a) positioned against each other.

4. A pipe joint according to any of the preceding claims, **characterized** in that the pipe joint comprises a band (7) arranged outside the first pipe (1).

5. A pipe joint according to any of the preceding claims, **characterized** in that there is a sealing groove (3b) inside the sleeve (3) and that a sealing (5) is arranged in the sealing groove (3b) between the sleeve (3) and the second pipe (2).

6. A pipe joint according to any of the preceding claims, **characterized** in that an auxiliary sealing (6) is positioned outside the sleeve (3) between the sleeve (3) and the first pipe (1).

7. A pipe joint according to any of the preceding claims, **characterized** in that the first pipe (1) and the sleeve (3) consist substantially of the same polymer and of different amounts of fillers and/or reinforcing materials.

8. A pipe joint according to any of the preceding claims, **characterized** in that the sleeve (3) is positioned in the first pipe (1) by glueing or welding.

9. A pipe joint according to any of the preceding claims, **characterized** in that the material of the sleeve (3) is more axially orientated than the material of the first pipe (1).

10. A pipe joint according to any of the preceding claims, **characterized** in that the material of the sleeve (3) comprises more axial reinforcing fibres than the material of the first pipe (1).

11. A pipe joint according to any of the preceding claims, **characterized** in that the sleeve (3) comprises reinforcing fibres in such a way that the radial heat expansion of the unit formed by the socket and the sleeve is less than the radial heat expansion of the body of the pipe (1).

12. A pipe joint according to any of the preceding claims, **characterized** in that the wall thickness of the sleeve (3) is less than the wall thickness of the socket, but that the sleeve is axially and radially stronger than the socket.

13. A method of making a pipe joint, in which method the end of a first pipe (1) is provided with a socket, a sleeve (3) is positioned inside the socket provided at the end of the first pipe (1), the end of a second pipe (2) is positioned inside the sleeve (3) and the first pipe (1) and the second pipe (2) are arranged essentially immovable with respect to each other by means for preventing an axial movement of the pipes (1, 2) to be joined, which movement would open the joint, **characterized** in that the sleeve (3) is reinforced such that the unit formed by the socket and the sleeve (3) is able to resist to higher pressure than the body of the first pipe (1) and the axial tensile strength of the unit formed by the socket and the sleeve (3) is higher than the axial tensile strength of the body of the firs pipe (1).

14. A method according to claim 13, **characterized** in that a wedge ring (4) is positioned between the first pipe (1) and the second pipe (2), the wedge ring serving as the means for preventing an axial movement of the pipes (1, 2) to be joined, which movement would open the joint.

15. A method according to claim 14, **characterized** in that the wedge ring (4) is positioned between the inner surface of the sleeve (3) and the end of the second pipe (2) and that the sleeve (3) and the wedge ring (4) have wedge surfaces (3a, 4a) positioned against each other.

16. A method according to any of the claims 13 to 15, **characterized** in that a band (7) is arranged and tightened outside the first pipe (1).

17. A method according to any of the claims 13 to 16, **characterized** in that a sealing (5) is positioned between the sleeve (3) and the second pipe (2).

18. A method according to any of the claims 13 to 17, **characterized** in that an auxiliary sealing (6) is positioned between the sleeve (3) and the first pipe (1).

19. A method according to any of the claims 13 to 18, **characterized** in that the end of the first pipe (1) is heated before the sleeve (3) is installed inside.

20. A method according to any of the claims 13 to 19, **characterized** in that the first pipe (1) is reduced on the sleeve (3) by means of heat.

21. A method according to any of the claims 13 to 20, **characterized** in that, before joining, the sleeve (3) is stretched axially more than the first pipe (1).

22. A method according to any of the claims 13 to 21, **characterized** in that the end of the first pipe (1) is expanded before installing the sleeve (3) inside.

23. A method according to claim 22, **characterized** in that the shrinkage of the first pipe (1) is so big that the joint between the first pipe (1) and the sleeve (3) becomes tight on account of the shrinkage of the first pipe (1).

24. A method according to any of the claims 13 to 23, **characterized** in that the joint between the first pipe (1) and the sleeve (3) is at least partially locked by welding or glueing.

25. A method according to claim 24, **characterized** in that the first pipe (1) and the sleeve (3) are locked by means of friction welding, by rotating or rotating back and forth with a rotary mandrel.

26. A method according to any of the claims 13 to 25, **characterized** in that the joint between the first pipe (1) and the sleeve (3) is locked by using ribs, grooves or other similar protrusions on the outer periphery of the sleeve (3).
